# EUROPEAN PATENT APPLICATION

(11) **EP 4 353 874 A1**
(43) Date of publication of application: **17.04.2024**
(21) Application number: 22201494.6
(22) Date of filing: 14.10.2022
(51) Int. Cl.: C25B 1/04, C25B 9/65, H02J 3/00, H02J 3/14, H02J 3/16, H02J 3/18

(54) **ELECTROLYSIS PLANT AND METHOD FOR OPERATING AN ELECTROLYSIS PLANT**

(71) Applicant: Siemens Energy Global GmbH & Co. KG, 81739 München (DE)
(72) Inventor: Alt, Birgit, 14055 Berlin (DE); Heck, Aron, 90610 Winkelhaid (DE); Karols, Pavels, 91052 Erlangen (DE); Schumann, Sven, 81927 München (DE); Orfei, Ricardo, 90766 Fürth (DE); Zurowski, Rainer, 91301 Forchheim (DE)

(57) **Abstract**

The invention is related to a large-scale electrolysis plant (1) comprising an electrolyser (3) and a rectifier (5), the rectifier (5) comprising a DC-voltage output (7) that is connected to the electrolyser (3) and an AC-voltage input (9) designed for a connection to the public grid (11) and for receiving power from the public grid (11) to supply the electrolyser (3) with electrolysis current, wherein an activatable power consumption device (13) connected to the rectifier (5) is provided that is designed for bridging the rectifier (5) and/or the electrolysis load and receiving grid power as needed. The activatable power consumption device (13) is installed on the AC-voltage input (9) and/or on the DC-voltage output (7) of the rectifier (5).

The invention is further related to a method for operating an electrolysis plant (1), wherein the electrolysis plant (1) is connected to the public grid (11).

## Description

The invention is related to an electrolysis plant comprising an electrolyser and a rectifier. The invention also relates to a method for operating an electrolysis plant connected to the public grid.

An electrolysis system is a device that uses electricity to convert substances (electrolysis). Corresponding to the variety of different electrochemical electrolysis processes, there is also a large number of electrolysis systems, such as an electrolysis system for water electrolysis.

Hydrogen is nowadays generated from water, for example, by means of a proton exchange membrane (PEM) electrolysis or an alkaline electrolysis. The electrolysis systems use electrical energy to produce hydrogen and oxygen from the water supplied. This process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water and gas bubbles (O₂ and H₂).

Current considerations are to generate valuable materials with excess energy from renewable energy sources in times of plenty of sun and wind, i.e. with above-average solar power or wind power generation. A resource can be hydrogen notably, which is generated by water electrolysis systems. For example, so-called renewable energy gas - also known as "RE gas" - can be produced bases of hydrogen. A renewable gas is a combustible gas that is obtained from renewable sources using electrical energy.

Hydrogen is a particularly environmentally friendly and sustainable energy source. It has the unique potential of realizing energy systems, transportation systems and large parts of chemical industry without CO₂ emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid.

In the case of electrolysis carried out on an industrial scale, the direct current is mainly provided via line-commutated rectifiers.

EP 3 556 905 A1 discloses such a circuit arrangement for the direct current supply of a plurality of electrolysers arranged in parallel. The circuit arrangement includes a rectifier, which converts an AC voltage on the input side into a first DC voltage on the output side. Each electrolyser is connected in parallel to the output of the rectifier via a converter, in particular a step-down converter, that converts the first direct voltage into a second direct voltage, such that the second direct voltage drops across the electrolyser. Each of the rectifiers, in particular the step-down converter, can be controlled or regulated thereby to adapt the level of its second direct voltage, its output voltage. By using the step-down converters designed to be controllable and/or adjustable for each of the electrolysers, the current flow through each electrolyser can also be adjusted as required when the electrolysers are connected in parallel.

In recent years, the energy generation market has changed significantly. The path inevitably leads away from large power plants to decentralized generators from renewable energy sources - spread across the whole country. In order to be able to operate a stable power grid despite this change, guidelines and standards are constantly adapted to the current situation.

Particular attention is paid to the so-called dynamic grid support. This property describes the behavior of the generating unit in the event of a grid failure. If it occurs in the public power grid (e.g. through a short-circuit in an overhead line) to a short-term voltage drop or (e.g. due to a lightning strike in a substation) to a short-term voltage increase, it must be ensured that that the public power grid remains stable and that there is no large-scale failure. For this to be obtained, basically, three things must be ensured: On the one hand, the generating unit may in the event of an error do not switch off, as this behavior would put additional strain on the network and could possibly lead to a chain reaction. On the other hand, the system must support the grid during the fault by feeding in capacitive or inductive reactive current, depending on the fault. The feeding of reactive current lowers or raises the mains voltage and thus counteracts the error voltage. As a third requirement the system must return to normal operation within a defined period after the error has ended.

Due to their enormous rotating centrifugal masses, large power plants have a certain self-regulating effect in the event of a fault and have so far ensured that grid faults only rarely lead to blackouts. Until a few years ago, it was therefore still permissible for decentralized generation units such as wind energy or photovoltaic systems to disconnect directly from the grid in the event of a fault and stop feeding.

However, the ever-increasing share of renewable energies has forced a rethink. In 2019, renewable energy accounted for around 42% of total electricity generation in Germany. In addition, there are generators from the field of internal combustion engines such as combined heat and power plants or gas turbines. This fundamental change and the fact that a large part of the energy generation from renewable energy is implemented on the grid side with converters means that decentralized generation units and systems are also required to make their contribution to dynamic grid support, to ensure a stable electricity network. Similar Fault Ride Through (FTR) requirements are also applicable for large consumers that are connected to the grid.

It is an object of the present invention to provide an electrolysis plant with Fault Ride Through Capability.

This object is solved by an electrolysis plant according to the independent claim 1.

Furthermore, this object is solved by a method to operate an electrolysis plant that is connected to the public grid according to the corresponding method claim 10.

Preferred embodiments of the invention are subject of correspondingly dependent claims and the following description.

The invention is based already on the consideration that for high-performance electrolysis systems to be connected as consumer to the public grid in future integrated energy systems, hardly any reliable approaches are known to implement a fault ride through capability in an electrolysis system, and, in particular to design and implement network support capability in case needed.

Connecting a large electrolysis plant to the public grid requires compliance with/the fulfilment of the local grid code requirements. Part of these requirements - especially for large plants - is a Fault Ride Through capability (FTR capability). The typical core requirement is to remain fully connected to the grid in case of a temporary voltage dip at the point of connection. The grid operator specifies a curve where the voltage dip is time dependently shown, during which the plant must remain connected. Longer or deeper voltage dips allow a disconnection of the plant. Fulfilling this requirement is a challenge for the electrolysis plant and its converter system.

According to the electrolyser plant of the invention the electrolysis plant comprises an electrolyser and a rectifier. The rectifier comprises a DC-voltage output that is connected to the electrolyser and an AC-voltage input that is designed for a connection to the public grid and for receiving power from the public grid to supply the electrolyser with electrolysis current. An activatable power consumption device is connected to the rectifier that is designed advantageously for bridging the rectifier and/or the electrolysis load and receiving grid power as needed.

This allows the availability of the load after the fault is cleared, what is a very important requirement for the grid operator. Should a large power generation plant trip in case of short time disturbances within the grid, e.g. typically a branch dropped into a power line and causes a short-circuit for a short time, the grid operator would struggle to balance the power input and output after fault clearance. The power plants producing the power cannot be adjusted quick enough. Therefore, only a certain power is allowed to trip, and it is essential for large consumers to remain connected in case of a voltage dip.

By providing a sufficiently large power activable consumption device to the rectifier a large electrolysis plant is enabled to grid code requirements and for Fault Ride Through Capability. Compared to other solutions and measures that are focused to rectifier system or converter the invention suggests a rather cost-efficient and reliable approach for an electrolysis plant of large scale.

So far, the known electrolysis processes and plants do not feature a Fault Ride Through capability, at least not for large scale plants. If the process has the ability, also the rectifier must remain connected and operating. A rectifier system can be chosen which has a fault ride through ability but is probably more expensive. In addition, the control units, pumps, etc. of the plant need to be supplied by an Uninterruptable Power Supply (UPS) system like a large battery back-up. The activable power consumption device of the invention, however, can be flexibly connected to the AC-side and/or the DC-side of the rectifier respectively without major restrictions or adaption to the rectifier. For the electrolysis plant it proves to be of a particular advantage that no complex auxiliary and replacement supply systems need to be provided. The electrolysis plant is conceived as being "FRT-ready" and scalable up to large electrolysis power consumption, as the activatable power consumption device is scalable accordingly. In addition, by replacing the load of the electrolysis on demand, the solution according to the invention can be used independently of the used electrolysis process.

Advantageously, the power consumption via the activatable power consumption device is flexibly adjustable. The AC electrical power that is directed from the public grid to the rectifier can preferably be bridged completely or alternatively only partly bridged on the AC-side, so that the rectifier may still be partly loaded or energized with AC power. The same flexibility is available in case the activatable power consumption device is connected on the DC-side of the electrolysis plant with the rectifier DC-voltage output. The bridged power is adjustable on the DC-side as well. A control system is used to determine the share of bridged power from the total power received from the public grid.

In an advantageous embodiment of the electrolysis plant the activatable power consumption device comprises a switchable power resistor that is connected to the AC-side of the rectifier.

This is one of two options that apply to ensure Fault Ride Through capability even if the rectifier system itself or the electrolysis process behind does not have this ability. By connecting a sufficiently dimensioned switchable power resistor the power consumption of the plant can be ensured from public grid point of view and requirement, even in case if the electrolysis trips. The switchable power resistor can be placed on the AC-side of the electrolysis unit if the rectifier would trip. Connecting a switchable power resistor on the AC-side of the rectifier is a cost-efficient and flexibly way of realizing FRT-capability. This may also be implemented as an upgrade solution to a conventional electrolysis plant that does not yet exhibit fault ride through capability.

As an alternative to an AC-side connection or as an additional design measure a sufficiently dimensioned switchable power resistor can be connected behind the rectifier on the DC-side for the required power consumption. This option is very favourable in cases where the electrolysis plant would trip but the rectifier would continue its operation. The solution allows higher control of the load replacement after a fault event.

Therefore, in another advantageous embodiment of the electrolysis plant the activatable power consumption device comprises a switchable power resistor that is connected to the DC-side of the rectifier, thus designed for bridging the electrolysis load.

In a further advantageous embodiment of the electrolysis plant on the DC-side a DC-circuit breaker is connected to the electrolyser designed to disconnect the electrolyser from power supply as needed.

In particular in electrolysis plant designs where the switchable power resistor is connected on the DC-side a DC-circuit breaker or other device capable of interrupting the current would be preferably required to fully disconnect the electrolyser in circumstances needed. Alternatively, it is also possible not to fully disconnect but preferably to adjust the DC-power that is directed through the switchable power resistor, so that the electrolyser may also still be partly supplied with current.

According to another advantageous embodiment of the electrolysis plant the DC-circuit breaker has a switching time between 100 ms and 500 ms, preferably 300 ms, for disconnection of the electrolyser from power supply.

The interruption must preferably be ensured to be activated within some few 100 ms, before any pre-fault load trips. This is preferably achievable by the application of semi-conductor-based switching devices or sufficiently dimensioned mechanical switches. The dimensions of the switching devices must meet the load of the electrolyser in the electrolysis plant.

In case lower switching times are required, in a further advantageous embodiment, a semi-conductor-based device is preferably to be used for disconnection, wherein the achievable disconnection time is then below 100 ms.

A cascaded series of controllable and switchable power resistors can be applied advantageously to contribute to possible part-load operation of the electrolyser.

In a further advantageous embodiment of the electrolysis plant the activatable power consumption device comprises a capacitor bank that is connected on the DC-side of the rectifier and that is designed for storing and discharging electrical energy at specific voltage level received from DC-voltage output.

By connecting a sufficiently dimensioned capacitor bank on the DC-side of the electrolysis plant an energy storage device is provided that can be loaded by receiving electrical energy from public grid via the rectifier, and, unloaded as well in case needed to use the stored electrical energy. The capacitor bank stores sufficient amount of energy at a suitable voltage. It is very advantageous that the capacitor bank can quickly discharge the stored energy into the electrolysis process to keep the current flowing to bridge the time until the grid voltage restores again after a temporary voltage dip. This prevents the tripping of the electrolysis process in the electrolyser on the DC-side behind the rectifier, since the power supply to it will basically not be interrupted during a short-term voltage drop.

The capacitor bank might also be used to prevent the electrolysis process connected to it from entering fuel cell mode for some time. Fuel cell mode will be initiated if the electrolysis voltage falls below a threshold value. Due to an adjusted design of the capacitor bank, for example by providing a secondary discharge path with a suitable resistance, it can be adjusted to discharge slowly and thus keep the electrolysis voltage above the threshold for some time. With this advantageous design of the capacitor bank a fuel cell mode of the electrolysis cells can be avoided and a safe electrolysis status of operation ensured while keeping the voltage above the required threshold value.

Furthermore, in another advantageous embodiment of the electrolysis plant the rectifier is designed for enabling a bidirectional operational mode, in particular a multilevel-modular-converter (MMC), and is connected to the public grid, so that voltage support can be achieved by providing reactive power for the public electricity grid.

The voltage source converter (VSC), in particular designed as a modular multilevel converter (MMC), is preferably designed for bidirectional operation and is connected to a central network connection point, so that voltage support through reactive power provision for the public power grid can be realized.

Advantageously, further network services for the public grid are also possible, such as the assumption of network functions.

The voltage source converter (VSC) is also preferably designed as an IGBT-based modular multilevel converter, so that electrical power from the supply line can be fed into the public power grid at the grid connection point as required. This is a special and advantageous form of bidirectional operation of the electrolyser plant. This is possible if excess power is stored in the capacitor bank connected on the DC-side of the converter that is available, like during partial load operation or maintenance of individual modules or parts of the electrolyser in normal operation, an MMC therefore optionally transfers power from the DC side to the AC side or vice versa, which promotes particularly flexible operation of the electrolysis plant.

Preferably converters are connected that allow a 4-quadrant mode operation. The energy stored inside the capacitors of the converter is usable for grid stabilization services, like for ancillary services, e.g. for fast frequency response requirements. This is advantageous in operational situations where part of the electrolyser in the plant is not in operation, like in part load operation or due to partial service shutdown, and the capacitor bank is not required to discharge electricity and supply the DC-current to an operating electrolyser or electrolyser modules.

In case the converter system is used this way, the electrolysis process is preferably disconnected from the capacitor bank. This can be achieved by a mechanical switch or a semi-conductor-based device.

In a further advantageous embodiment of the electrolysis plant a control unit is provided with an interface to a grid stabilization equipment that is designed to discharge capacitor bank.

The control interface to grid stabilizing equipment which measures at point of connection, enables the full exploit of the energy stored that is not required at non-operating electrolysis units and may be used otherwise.

Another aspect of the invention relates to a method to operate an electrolysis plant that is connected to the public grid.

In said method for operating an electrolysis plant the electrolysis plant is being connected to the public grid, an AC-voltage received from the public grid is supplied to the rectifier via the AC-voltage input, and wherein during a temporary voltage dip at the point of connection the electrolysis plant stays connected, while the activatable power consumption device is being activated.

With this method for operating the electrolysis plant the power consumption of the electrolysis plant is maintained while being connected to public grid in case of a temporary voltage dip at the point of connection. The requirement to demonstrate a Fault Ride Through capability for a large electrolysis plant while being connected to the grid and operated is ensured.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: a schematic illustration of an example of an electrolysis plant provided with Fault Ride- Through capability;
- FIG 2: a schematic illustration of another example of an electrolysis plant provided with Fault Ride- Through capability.

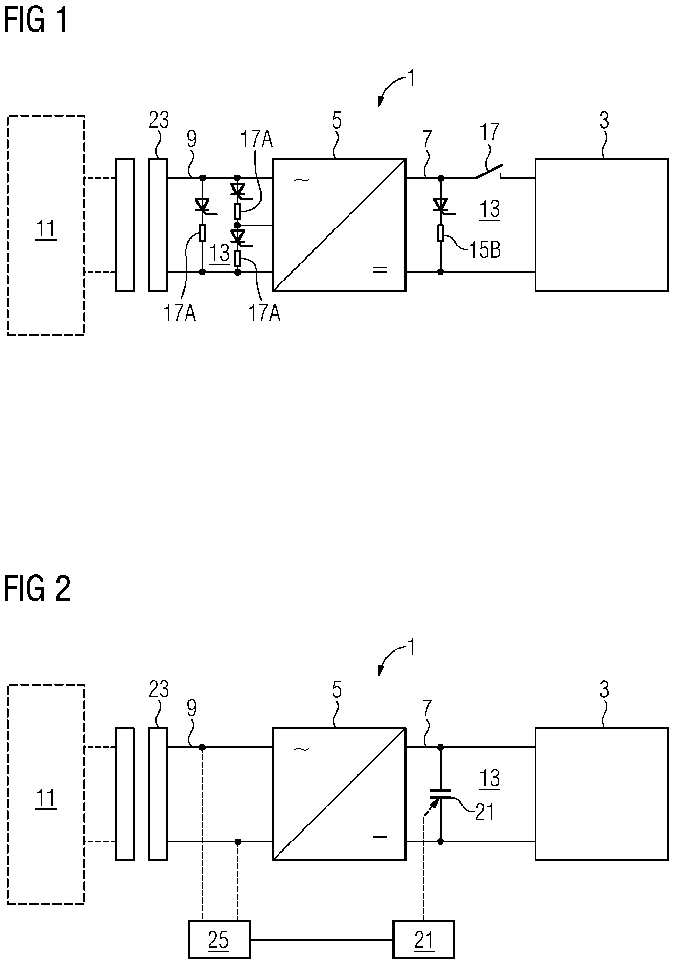

FIG 1 shows a schematic view of an example of an electrolysis plant 1. The electrolysis plant 1 comprises an electrolyser 3 and a rectifier 5. The rectifier 5 has an AC-input 9 for alternating current and a DC-voltage output 7 for direct current. The electrolysis plant 1 is connected to the public power grid 11 via a transformer 23, so that when the electrolysis system 1 is in operation, the electrolyser 3 is supplied with direct current to run the electrolysis process. On the AC-side of the rectifier 5 an activatable power consumption device 13 is installed, which comprises a plurality of switchable power resistors 15A connected to the poles of the AC-voltage input 9. The power resistors 15A are equipped with Thyristors or otherwise controllable switching units based on a semi-conductor device or fast-acting mechanical switch. A cascade of power resistors 15A is formed. On the DC-side a similar arrangement can be installed alternatively or in addition to the arrangement on the AC-side with a switchable power resistor 15B connected to the DC-poles of the DC-output 7 of the rectifier 5. The activatable power consumption device (13) may therefore be installed on the AC-voltage input (9) and/or on the DC-voltage output (7) of the rectifier (5). It is also possible that a plurality of switchable power resistors 15B is installed to form a suitable cascade of power resistors 15B, depending on the consumption requirements of the power consumption device 13. This can be adapted and designed to the needs considering the size and power consumption range of the electrolyser plant 1 when being in operation. A typical power consumption range for a whole large-scale electrolyser plant 1 is more than 50 MW, typically 100 MW and above. This power range applies to the whole electrolysis plant 1. A large-scale electrolysis plant 1 will therefore typically comprise a plurality of electrolysers 3 or so-called electrolyser blocks, each block arranged and designed accordingly as shown in simplified schematic view of FIG 1. Therefore, a large-scale electrolyser plant 1 will consist of multiple arrangements as shown in FIG 1. An electrolyser 3 or electrolyser block will have about 5 MW to 20 MW and above of power consumption. The overall large-scale electrolysis plant 1 will be in the range stated above of more than 50 MW, typically 100 MW and above. Particularly for large-scale electrolysis plants 1 the Fault Ride Through capability is expected to be of high relevance in the future. On the DC-side a DC-circuit breaker 17 is provided that is connected to the electrolyser 3. The DC-circuit breaker 17 is controllable and designed to completely disconnect the electrolyser 3 as needed from DC-power supply.

The DC-circuit breaker 17 has a rather short switching time between 100 ms and 500 ms, preferably 300 ms, for disconnection of the electrolyser from DC power supply provided from the DC-voltage output 7. As the power consumption device 13 comprises a cascaded series of the power resistors 15A, 15B at least in the DC-side, the electrolysis plant is equipped for a part-load operation of the electrolyser 3. The electrolyser 3 comprises a plurality of electrolyser modules not shown in detail in FIG 1. The power resistors 15A, 15B are sufficiently dimensioned continuously to ensure power consumption of the electrolysis plant 1, even in situations where the electrolyser 3 would trip but the rectifier 5 would continue operation. When connected to the public grid 11 the electrolyser plant 1 is capable for Fault-Ride Through operation and compliance with local grid code requirements. In normal operational mode of the electrolysis plant 1 the electrolysis plant 1 is connected to the public grid 11 via the transformer 23, that provides three phases medium voltage output at nominal grid frequency of 50 or 60 Hz for example. The AC-Voltage initially received from the public grid 11 and provided on the secondary side of the connection transformer 23 after transformation is supplied to the rectifier 5 via the AC-voltage input 9. During a temporary voltage dip at the point of connection the electrolysis plant 1 stays connected to the public grid 11, while the activatable power consumption device 13 is being activated on the AC-side and/or on the DC-side of the rectifier 5 by opening respective current path in the switchable power resistors 15A, 15B respectively.

The rectifier 5 is designed advantageously for enabling also a bidirectional operational mode in case needed. In particular a multilevel-modular-converter (MMC) is being used as rectifier 5 that comprises a plurality of capacitors as elements of the IGBT-Topology (IGBT: Isolated Gate Bipolar Transistor), that can be used as inherent electrical storage capacity that can be discharged as required. The inherent electrical energy of the capacitors in the IGBT-Topology is converted in the MMC based rectifier 5 to AC, which is being supplied to the AC-voltage output 9 to stabilize the public grid 11. With the rectifier 5 designed as MMC and connected to the public grid 11, a voltage support can be achieved by providing reactive power for the public electricity grid 11 on demand.

In FIG 2 a schematic illustration of another example of an electrolysis plant 1 is provided, which is enabled for Fault Ride Through capability during operation when being connected to the public grid 11. In a rather simple but feasible arrangement the activatable power consumption device 13 comprises a capacitor bank 19 with a plurality of capacitors. The capacitor bank is connected on the DC-side of the rectifier 5 between the DC-poles of the DC-voltage output 7. Here the electrolysis plant comprises a control unit 21 with an interface to a grid stabilization equipment 25 that is designed to discharge capacitor bank 21 in a controlled manner. By connecting a sufficiently dimensioned capacitor bank 21 on the DC-side of the electrolysis plant 1 an energy storage device is realized that can be loaded by receiving electrical energy from public grid 11 via the rectifier 5, and, unloaded as well in case needed to use the stored electrical energy in the capacitor bank 21. The capacitor bank stores sufficient amount of energy at a suitable DC-voltage. It is very advantageous that the capacitor bank can also quickly discharge the stored energy into the electrolysis process to keep the current flowing to bridge the time until the grid voltage restores again after a temporary voltage dip. This prevents the tripping of the electrolysis process in the electrolyser 3 on the DC-side behind the rectifier 5, since the power supply to it will basically not be interrupted during a short-term voltage drop. To obtain this the rectifier 5 is designed as a converter that allows 4-quadrant mode of operation, so that a bidirectional operation is possible that included deployment of grid stabilization services.

The technology which is applied for the electrochemical process in the electrolyser 3 may be based on a plurality of alkaline electrolysis cells and/or electrolysis cells having a proton exchange membrane, hereinafter referred to as PEM-cell, and /or an anion exchange membrane hereinafter referred to as AEM-cell. In the electrolysis plant 1 for the electrolyser 3 combinations of different types of electrolysers 3 and underlying electrolysis processes and cells are also possible.

## Claims

1. Electrolysis plant (1) comprising an electrolyser (3) and a rectifier (5), the rectifier (5) comprising a DC-voltage output (7) that is connected to the electrolyser (3) and an AC-voltage input (9) designed for a connection to the public grid (11) and for receiving power from the public grid (11) to supply the electrolyser (3) with electrolysis current, wherein an activatable power consumption device (13) connected to the rectifier (5) is provided that is designed for bridging the rectifier (5) and receiving grid power as needed.

2. Electrolysis plant (1) according to claim 1, wherein the activatable power consumption device (13) comprises a switchable power resistor (15A) connected to the AC-side of the rectifier (5)

3. Electrolysis plant (1) according to claim 1 or 2, wherein the activatable power consumption device (13) comprises a switchable power resistor (15B) connected to the DC-side of the rectifier (5), thus designed for bridging the electrolysis load.

4. Electrolysis plant (1) according to claim 3, wherein on the DC-side a DC-circuit breaker (17) is connected to the electrolyser (3) designed to disconnect the electrolyser (3) from power supply as needed.

5. Electrolysis plant (1) according to claim 4, wherein the DC-circuit breaker (17) has a switching time between 100 ms and 500 ms, preferably 300 ms, for disconnection of the electrolyser (3) from power supply.

6. Electrolysis plant (1) according to claims 2 to 5, wherein the power consumption device (13) comprises a cascaded series of the power resistors (15A, 15B) designed for a part-load operation of electrolyser (3).

7. Electrolysis plant (1) according to one of the preceding claims, wherein the activatable power consumption device (13) comprises a capacitor bank (19) connected on the DC-side of the rectifier (5) and designed for storing and discharging electrical energy at specific voltage level received from DC-voltage output.

8. Electrolysis plant (1) according to claim 7, comprising a control unit (21) with an interface to a grid stabilization equipment (25) that is designed to discharge capacitor bank (21) .

9. Electrolysis plant (1) according to one of the preceding claims, wherein the rectifier (5) is designed for enabling a bidirectional operational mode, in particular a multilevel-modular-converter (MMC), and that is connected to the public grid (11), so that voltage support can be achieved by providing reactive power for the public electricity grid (11).

10. Method for operating an electrolysis plant (1) according to one of the preceding claims, wherein the electrolysis plant (1) is connected to the public grid (11), wherein AC-Voltage from the public grid (11) is supplied to the rectifier (5) via the AC-voltage input (9), and wherein during a temporary voltage dip at the point of connection the electrolysis plant stays connected, while the activatable power consumption device (13) is being activated.
